(19) Europäisches Patentamt
European Patent Office
Office européen des brevets

(11) EP 4 287 077 A1

(12) EUROPEAN PATENT APPLICATION

(43) Date of publication:
06.12.2023 Bulletin 2023/49

(21) Application number: 22176304.8

(22) Date of filing: 31.05.2022

(51) International Patent Classification (IPC):
G06N 3/08 (2023.01)     G06N 3/04 (2023.01)

(52) Cooperative Patent Classification (CPC):
G06N 3/08; G06N 3/044; G06N 3/045; G06N 3/048

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventors:
• Mishra, Aayush
  209625 Farrukhabad, Uttar Pradesh (IN)

• Janardhanan, Shaiju
  670303 Kannur, Kerala (IN)
• Krishnan, Sandeep
  560100 Bangalore, Karnataka (IN)
• Maskeri Rama, Girish
  560095 Bangalore, Karnataka (IN)

(74) Representative: Isarpatent
Patent- und Rechtsanwälte Barth
Charles Hassa Peckmann & Partner mbB
Friedrichstrasse 31
80801 München (DE)

(54) **METHOD AND APPARATUS FOR TESTING AN ARTIFICIAL NEURAL NETWORK USING SURPRISING INPUTS**

(57) Abstract of the disclosure

The present invention provides a method and system for testing an artificial neural network with surprising inputs. The method comprises receiving, by the processing unit, a plurality of test input for the artificial neural network. The method further comprises analyzing, by a processing unit (202), a plurality of training data items of the artificial neural network to determine an activation map for each neuron of the plurality of neurons. The method comprises analyzing, by the processing unit (202), the received plurality of test inputs based on the determined surprising input adequacy metric to determine at least one surprising input from the plurality of test inputs. The method further comprises testing, by the processing unit (202), the artificial neural network based on the determined at least one surprising input.

FIG 1

EP 4 287 077 A1

**Description**

The present invention relates to a field of engineering of artificial neural networks, and more particularly relates to a method and apparatus for testing an artificial neural network using surprising inputs.

An artificial neural network is trained and tested using a dataset comprising a plurality of training data items. The plurality of training data items comprises a plurality of inputs to be fed to the artificial neural network and a corresponding plurality of outputs that is desired to be generated by the artificial neural network. The artificial neural network further determines a plurality of patterns in the plurality of training data items. The artificial neural network is trained to receive an input, map the received input to a pattern of the determined plurality of patterns and generate an expected output based on the received input and the mapped pattern. However, in a case where an input cannot be mapped to any of the determined plurality of patterns, the artificial neural network fails to generate an appropriate output. Thus, such inputs are deemed to be surprising.

Such surprising inputs are dangerous, especially in use-cases where the artificial neural networks are used in safety critical applications such as autonomous vehicles, surveillance systems, or traffic management systems. Any malfunction of the artificial neural network in such systems could potentially lead to loss of human life and property. For example, if the artificial neural network configured to prevent vehicular collisions starts malfunctioning, a number of road accidents may increase.

To avoid the problem of surprising inputs the artificial neural networks are trained and tested with a humongous dataset comprising a gigantic number of training data items. Furthermore, the artificial neural networks are repeatedly tested to ensure robustness. However, time used for such repeated cycles of testing and retraining of the artificial neural networks add up and eventually take up a very large amount of time, labor, and developmental costs. Furthermore, a wide variety of applications like traffic management systems use artificial neural networks which are very large in size. It is a difficult, time intensive and processing power intensive process to determine and incorporate surprising inputs in such very large artificial neural networks.

In light of above, there exists a need for an efficient method and system for testing an artificial neural network with surprising inputs. Therefore, it is an object of the present invention to provide a method and apparatus for testing an artificial neural network with surprising inputs.

The object of the invention is achieved by a method of testing an artificial neural network using surprising inputs by compression of activation traces. In one example, the artificial neural network is implemented inside a traffic management system. The traffic management system comprises a plurality of cameras to capture a plurality of images sequentially as time series data. In such a case, the artificial neural network is configured to detect traffic violations by analyzing the captured plurality of images. Examples of the artificial neural network include but is not limited to a feed forward neural network, a Radial basis function neural network, a recurrent neural network, or a convolutional neural network.

In one embodiment, the method comprises receiving, by a processing unit, a plurality of test input for the artificial neural network. The plurality of test input comprises a plurality of data items for testing the artificial neural network for robustness. In one example, the plurality of test input comprises a plurality of sensor data items captured by a plurality of sensors. In another example, the plurality of test input comprises the plurality of images captured by the plurality of cameras of the traffic management system.

The method comprises deploying, by the processing unit, the artificial neural network on each of a plurality of training data items used to train the artificial neural network. In one example, the plurality of training data items comprises a plurality of training images. The plurality of training images comprises images which are used to train the artificial neural network. The plurality of training images have a plurality of data labels comprising information used to train the artificial neural network. In another example, the plurality of training data items comprises a training dataset which was used to train the artificial neural network to perform one or more functions.

To deploy the artificial neural network, each of the plurality of training data items is passed through the artificial neural network. The method further comprises determining, by the processing unit, a plurality of outputs generated by the artificial neural network, based on the plurality of training data items. In one example, the artificial neural network is configured to detect traffic violations from the plurality of images captured by the camera. In such a case, the plurality of training data items comprises the plurality of images captured by the camera and the plurality of outputs comprises labels corresponding to detection of traffic violations in the plurality of images.

The artificial neural network comprises a plurality of neurons arranged in a plurality of layers. The method further comprises analyzing, by the processing unit, the plurality of training data items and the plurality of outputs to determine an activation range for each neuron of the plurality of neurons of the artificial neural network. The activation range of a specific neuron corresponds to a maximum and minimum activation level of the specific neuron with respect to a specific input passed through the specific neuron. When an input of the plurality of training data items is passed through the artificial neural network, each neuron of the plurality of neurons is trained to generate an output. Each layer of the plurality of layers has an activation function. The activation function is a nonlinear transform which is configured to convert an input fed into a specific layer, into an output generated by the specific layer. A plurality of outputs generated by the artificial neural network based on each input passed through the artificial neural network, is called an activation trace of the input with respect to the artificial neural network. The artificial neural network has a plurality of activation traces corresponding to a plurality of inputs fed into the artificial neural network.

The method further comprises generating, by the processing unit, an activation map for each of the plurality of neurons of the artificial neural network based on the determined activation range for each neuron of the plurality of neurons. The activation map of a neuron is a spatial representation of the activation range of the neuron. The activation map of a specific neuron comprises an activation trace associated with the specific neuron. A plurality of activation maps associated with the artificial neural network comprises a plurality of activation traces of the artificial neural network.

The method further comprises ranking, by the processing unit, the plurality of training data items based on a value of each of the plurality of output generated by the artificial neural network from each of the plurality of training data items. In one example, the plurality of training data items are ranked based on the activation range of each neuron of the plurality of neurons and each training data item of the plurality of training data items. The method further comprises determining, by the processing unit, a set of training data items which are ranked highest among the plurality of training data items. The method further comprises determining, by the processing unit, an activation threshold from the set of training data items. The activation threshold corresponds to an activation range of a lowest ranked training data item in the set of training data items.

The method further comprises binarizing, by the processing unit, the activation map of each of the plurality of neurons based on the determined activation threshold. In other words, the plurality of activation maps of the artificial neural network are binarized by the processing unit. In one example, the activation map of each neuron is split into a first portion comprising outputs greater than the activation threshold and a second portion comprising outputs lesser than the activation threshold. The method further comprises generating a sum of the binarized plurality of activation maps across spatial dimensions to compress the plurality of activation traces comprised in the plurality of activation maps. In other words, the activation map of each neuron is compressed by the processing unit to generate the plurality of compressed activation traces for the artificial neural network.

The method further comprises determining, by the processing unit, a type of surprise adequacy metric from a plurality of types of surprise adequacy metrics. The plurality of types of surprise adequacy metrics includes at least one of a distance-based metrics, a likelihood based metrics, and a mahalanobis distance based metric. In one example, the type of surprise adequacy metric is determined based on a user input. In another example, the type of surprise adequacy metric is determined based on a type of the artificial neural network. In one example, the artificial neural network is a convoluted neural network. In such a case the mahalanobis distance based metric is determined for the artificial neural network. In one example, the type of surprise adequacy metric is determined by the processing unit arbitrarily.

In one example, the type of surprise adequacy metric is determined to be the Mahalanobis distance-based metric (MDSA). The MDSA metric is calculated for an input based on a mean value and a covariance matrix associated with the plurality of compressed activation traces of the artificial neural network. The method further comprises determining the mean value and the covariance matrix based on the plurality of compressed activation traces of the artificial neural network.

The method further comprises determining, by the processing unit, a surprising input adequacy metric for the artificial neural network based on an analysis of the plurality of compressed activation traces. In one example, the surprising input adequacy metric is determined based on the determined mean value and the determined covariance matrix. The method further comprises determining, by the processing unit, a value of the surprise adequacy metric for each of the plurality of test inputs. The method further comprises analyzing, by the processing unit, the received plurality of test inputs based on the determined surprising input adequacy metric to determine at least one surprising input from the plurality of test inputs.

The method further comprises determining, by the processing unit, for each test input of the plurality of test inputs, the at least one parameter value specific to the determined type of surprising input adequacy metric. For example, in a case where the type of surprising input adequacy metric is determined to be the Mahalanobis distance-based metric, the determined at least one parameter value comprises the mean and the covariance matrix. The method further comprises determining, by the processing unit, at least one surprising input from the plurality of test inputs based on an analysis of the at least one parameter value determined for each test input of the plurality of test inputs. In one example, the at least one surprising input is a test input which has the greatest surprising input metric among the plurality of test inputs. The method further comprises testing, by the processing unit, the artificial neural network based on the determined at least one surprising input. Advantageously, the artificial neural network is trained only using surprising inputs. Thus, testing time of the artificial neural network is reduced. Furthermore, the method enables testing of the artificial neural network with a large number of surprising inputs. Therefore, a robustness of the artificial neural network is significantly improved.

The object of the invention is further achieved by an apparatus for testing an artificial neural network with surprising inputs. In one embodiment, the method comprises a processing unit configured to receive a plurality of test input for the artificial neural network. The plurality of test input comprises a plurality of data items for testing the artificial neural network for robustness. In one example, the plurality of test input comprises one or more images captured by the camera.

The processing unit is further configured to deploy the artificial neural network on each of the plurality of training data items. To deploy the artificial neural network, each of the plurality of training data items is passed through the artificial neural network. The processing unit is further configured to determine a plurality of outputs generated by the artificial neural network, based on the plurality of training data items. In one example, the artificial neural network is configured to detect traffic violations from the plurality of images captured by the camera. In such a case, the plurality of training data items comprises the plurality of images captured by the camera and the plurality of outputs comprises labels corresponding to detection of traffic violations in the plurality of images.

The artificial neural network comprises a plurality of neurons arranged in a plurality of layers. The processing unit is further configured to analyze the plurality of training data items and the plurality of outputs to determine an activation range for each neuron of the plurality of neurons of the artificial neural network. The activation range of a specific neuron corresponds to a maximum and minimum activation level of the specific neuron with respect to a specific input passed through the specific neuron. When an input of the plurality of training data items is passed through the artificial neural network, each neuron of the plurality of neurons is trained to generate an output. Each layer of the plurality of layers has an activation function. The activation function is a nonlinear transform which is configured to convert an input fed into a specific layer, into an output generated by the specific layer. A plurality of outputs generated by the artificial neural network based on each input passed through the artificial neural network, is called an activation trace of the input with respect to the artificial neural network. The artificial neural network has a plurality of activation traces corresponding to a plurality of inputs fed into the artificial neural network.

The processing unit is further configured to generate an activation map for each of the plurality of neurons of the artificial neural network based on the determined activation range for each neuron of the plurality of neurons. The activation map of a neuron is a spatial representation of the activation range of the neuron. The activation map of a specific neuron comprises an activation trace associated with the specific neuron. A plurality of activation maps associated with the artificial neural network comprises a plurality of activation traces of the artificial neural network.

The processing unit is further configured to rank the plurality of training data items based on a value of each of the plurality of output generated by the artificial neural network from each of the plurality of training data items. In one example, the plurality of training data items are ranked based on the activation range of each neuron of the plurality of neurons and each training data item of the plurality of training data items. The processing unit is further configured to determine a set of training data items which are ranked highest among the plurality of training data items. The processing unit is further configured to determine an activation threshold from the set of training data items. The activation threshold corresponds to an activation range of a lowest ranked training data item in the set of training data items.

The processing unit is further configured to binarize the activation map of each of the plurality of neurons based on the determined activation threshold. In other words, the plurality of activation maps of the artificial neural network are binarized by the processing unit. In one example, the activation map of each neuron is split into a first portion comprising outputs greater than the activation threshold and a second portion comprising outputs lesser than the activation threshold. The method further comprises generating a sum of the binarized plurality of activation maps across spatial dimensions to compress the plurality of activation traces comprised in the plurality of activation maps. In other words, the activation map of each neuron is compressed by the processing unit to generate the plurality of compressed activation traces for the artificial neural network.

The processing unit is further configured to determine a type of surprise adequacy metric from a plurality of types of surprise adequacy metrics. The plurality of types of surprise adequacy metrics includes at least one of a distance-based metrics, a likelyhood based metrics, and a mahalanobis distance based metric. In one example, the type of surprise adequacy metric is determined based on a user input. In another example, the type of surprise adequacy metric is determined based on a type of the artificial neural network. In one example, the artificial neural network is a convoluted neural network. In such a case the mahalanobis distance based metric is determined for the artificial neural network. In one example, the type of surprise adequacy metric is determined by the processing unit arbitrarily.

In one example, the type of surprise adequacy metric is determined to be the Mahalanobis distance-based metric (MDSA). The MDSA metric is calculated for an input based on a mean value and a covariance matrix associated with the plurality of compressed activation traces of the artificial neural network. The processing unit is further configured to determine the mean value and the covariance matrix based on the plurality of compressed activation traces of the artificial neural network.

The processing unit is further configured to determine a surprising input adequacy metric for the artificial neural network based on an analysis of the plurality of compressed activation traces. In one example, the surprising input adequacy metric is determined based on the determined mean value and the determined covariance matrix. The processing unit is further configured to determine a value of the surprise adequacy metric for each of the plurality of test inputs.

The processing unit is further configured to determine the received plurality of test inputs based on the determined surprising input adequacy metric to determine at least one surprising input from the plurality of test inputs.

The processing unit is further configured to determine for each test input of the plurality of test inputs, the at least one parameter value specific to the determined type of surprising input adequacy metric. For example, in a case where the type of surprising input adequacy metric is determined to be the Mahalanobis distance-based metric, the determined at least one parameter value comprises the mean and the covariance matrix. The processing unit is further configured to determine at least one surprising input from the plurality of test inputs based on an analysis of the at least one parameter value determined for each test input of the plurality of test inputs. In one example, the at least one surprising input is a test input which has the greatest surprising input metric among the plurality of test inputs. The processing unit is further configured to determine the artificial neural network based on the determined at least one surprising input. Advantageously, the artificial neural network is trained only using surprising inputs. Thus, testing time of the artificial neural network is reduced. Furthermore, the apparatus enables testing of the artificial neural network with a large number of surprising inputs. Therefore, a robustness of the artificial neural network is significantly improved.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1        is a block diagram of an apparatus for testing an artificial neural network, according to an embodiment of the present invention;

FIG 2        is a block diagram of management system, such as those shown in FIG 1, in which an embodiment of the present invention can be implemented;

FIG 3        is a block diagram of a neural network test module, such as those shown in FIG 1, in which an embodiment of the present invention can be implemented;

FIG 4A-C     is an exemplary illustration of a method of testing an artificial neural network using surprising inputs, according to an embodiment of the present invention; and

FIG 5        is an exemplary illustration of a process of compressing an activation map associated with an artificial neural network, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

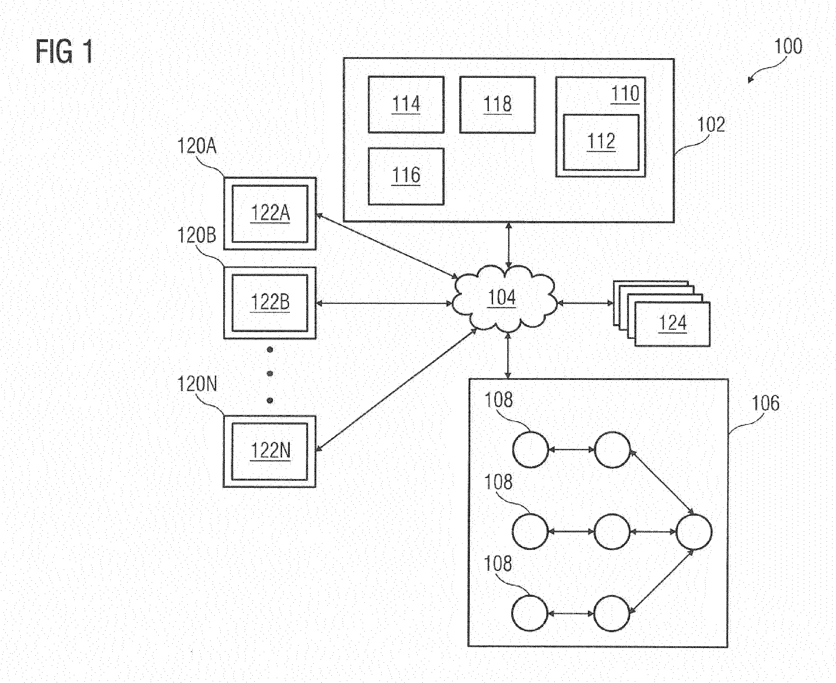

FIG 1 is a block diagram of an apparatus 100 for testing an artificial neural network 106 using surprising inputs, according to an embodiment of the present invention. In FIG 1, the apparatus 100 includes a management system 102, an artificial neural network 106 and a plurality of sensors 120A-N. The plurality of sensors 120A-N is configured to capture time series data from an area of interest. Examples of the plurality of sensors 120A-N comprises pressure sensors, voltage sensors, flow rate sensors, and image capture devices. As used herein, "apparatus" refers to a processing environment comprising configurable computing physical and logical resources, for example, networks, servers, storage, applications, services, etc., and data distributed over a platform, such as cloud computing platform. The apparatus 100 provides on-demand network access to a shared pool of the configurable computing physical and logical resources. The management system 102 is communicatively connected to the plurality of sensors 120A-N via the network 104 (such as Local Area Network (LAN), Wide Area Network (WAN), Wi-Fi, Internet, any short range or wide range communication).

In one example, the management system 102 is a traffic management system. In such a case, the management system 102 is configured to detect traffic violations in an area. Furthermore, in such a case, the plurality of sensors 120A-N comprises a plurality of cameras configured to sequentially capture a plurality of images from the area of interest. The plurality of images are captured as time series data. In one example, the management system 102 uses the artificial neural network 106 to analyze the plurality of images to detect one or more traffic rule violations captured in the plurality of images.

The plurality of sensors 120A-N may be connected to the management system 102 or several other components (not shown in FIG 1) via physical connections. The physical connections may be through wiring between the plurality of sensors 120A-N. Alternatively, the plurality of sensors 120A-N may also be connected via non-physical connections (such as Internet of Things (IOT)) and 5G networks.

The management system 102 may be a standalone server deployed at a control station or may be a remote server on a cloud computing platform. In a preferred embodiment, the management system 102 may be a cloud-based management system. The management system 102 may comprise a platform 110 (such as a cloud computing platform), a neural network test module 112, a server 114 including hardware resources and an operating system (OS), a network interface 116 and a database 118. The network interface 116 enables communication between the management system 102, and the plurality of sensors 120A-N. The server 114 may include one or more servers on which the management system 102 is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS.

The database 118 stores the information relating to the management system 102 and the plurality of sensors 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110.

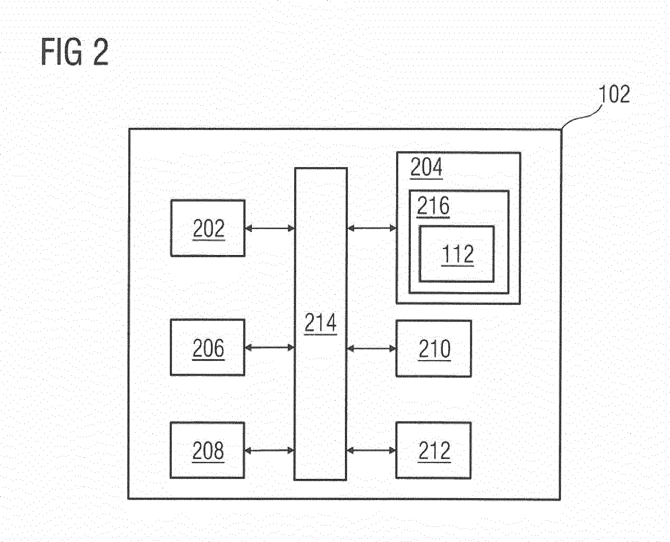

FIG 2 is a block diagram of the management system 102, such as those shown in FIG 1, in which an embodiment of the present invention can be implemented. In FIG 2, the management system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the neural network test module 112 stored in the form of machine-readable instructions on any of the above-mentioned storage media and may be in communication with and executed by the processor(s) 202.

When executed by the processing unit 202, the neural network test module 112 causes the processing unit 202 to test the artificial neural network 106 by using surprising inputs.

In one example, the management system 102 is a traffic management system. In such a case, the plurality of sensors 120A-N comprises the plurality of cameras configured to capture the plurality of images 124. The plurality of images 124 may be captured sequentially as time series data. In such a case, the artificial neural network 106 is configured to detect traffic violations by analyzing the captured plurality of images 124. Examples of the artificial neural network 106 include but is not limited to a feed forward neural network, a Radial basis function neural network, a recurrent neural network, or a convolutional neural network.

The processing unit is configured to receive a plurality of test input for the artificial neural network 106. The plurality of test input comprises a plurality of data items for testing the artificial neural network for robustness. In one example, the plurality of test input comprises the plurality of images 124 captured by the plurality of cameras of the management system 102. In one example, the plurality of images 124 comprises images of roadways and vehicles.

The processing unit 202 is further configured to deploy the artificial neural network on each of a plurality of training data items which are used to train the artificial neural network 106. In one example, the plurality of training data items comprises a plurality of training images. The plurality of training images comprises images which are used to train the artificial neural network 106. The plurality of training images have a plurality of data labels comprising information

6

used to train the artificial neural network 106.

To deploy the artificial neural network, the processing unit 202 is configured to pass each of the plurality of training data items through the artificial neural network 106. The artificial neural network 106 comprises a plurality of neurons 108 arranged in a plurality of layers. Each layer of the plurality of layers has an activation function. The activation function is a nonlinear transform which is configured to convert an input fed into a specific layer, into an output generated by the specific layer. A plurality of outputs generated by the artificial neural network based on each input passed through the artificial neural network, is called an activation trace of the input with respect to the artificial neural network. The artificial neural network has a plurality of activation traces corresponding to a plurality of inputs fed into the artificial neural network.

Each of the plurality of neurons 108 are configured to generate an output value when activated by each of the plurality of training data items. The processing unit 202 is further configured to determine a plurality of outputs generated by the artificial neural network 106, when the artificial neural network 106 is deployed on the plurality of training data items.

The processing unit 202 is configured to analyze the plurality of training data items and the plurality of outputs to determine an activation range for each neuron of the plurality of neurons of the artificial neural network 106. The activation range of a specific neuron corresponds to a maximum and minimum activation level of the specific neuron with respect to a specific input passed through the specific neuron.

The processing unit 202 is further configured to generate an activation map for each of the plurality of neurons 108 of the artificial neural network 106 based on the determined activation range for each neuron of the plurality of neurons 108. The activation map of a neuron is a spatial representation of the activation range of the neuron. The activation map of a specific neuron comprises an activation trace associated with the specific neuron. A plurality of activation maps associated with the artificial neural network comprises a plurality of activation traces of the artificial neural network.

The processing unit 202 is further configured to rank the plurality of training data items based on a value of each of the plurality of output generated by the artificial neural network 106. In one example, the plurality of training data items are ranked based on the activation range of each neuron of the plurality of neurons 108 and each training data item of the plurality of training data items.

The processing unit 202 is further configured to determine a set of training data items which are ranked highest among the plurality of training data items. In one example, the processing unit 202 is configured to determine the set of training data items which are in a top twenty percentile of the ranked plurality of training data items.

The processing unit 202 is further configured to determine an activation threshold from the determined set of training data items. The activation threshold corresponds to an activation range of a lowest ranked training data item in the set of training data items.

The processing unit 202 is configured to binarize the activation map of each of the plurality of neurons based on the determined activation threshold. In one example, the activation map of each neuron is split into a first portion comprising outputs greater than the activation threshold and a second portion comprising outputs lesser than the activation threshold. The processing unit 202 is further configured to generate a sum of the binarized plurality of activation maps across spatial dimensions to compress the plurality of activation traces comprised in the plurality of activation maps. In other words, the activation map of each neuron is compressed by the processing unit 202 to generate the plurality of compressed activation traces for the artificial neural network 106.

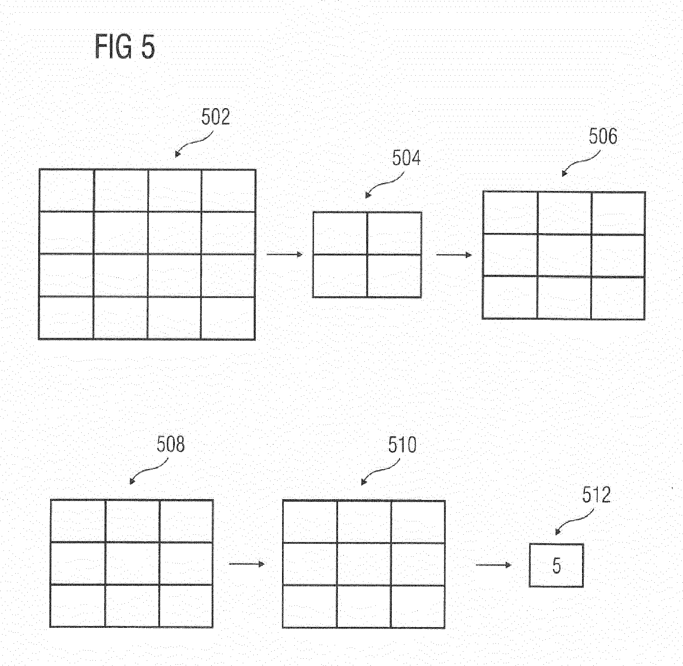

Referring to FIG. 5, FIG. 5 depicts a process of compressing a plurality of activation traces 502 into a single scalar value 512.

In one example, the plurality of activation traces 502 are converted into the activation map 506 of the artificial neural network by application of a convolution filter 504 on the plurality of activation traces 502 by the processing unit 202. Furthermore, the activation map 506 of the artificial neural network is binarized using the activation threshold to generate a binarized activation map 510. The binarized activation map 510 is further compressed using one or more data compression algorithms to obtain the scalar value 512 which represents the plurality of activation traces 502. Thus a dimensionality of the binarized activation map 510 is reduced. Thus, the plurality of activation traces are compressed. Advantageously, a giant number of activation traces may be used for determining surprising inputs by using only the single scalar value 512. Hence, the artificial neural network 106 may be tested accurately.

Further advantageously, since the complete activation trace of only the single scalar value needs to be kept in memory at one time, the apparatus 100 is scalable.

Further advantageously, the apparatus 100 retains meaningful information about the activation map 502 by using the context of the single scalar value 512. The single scalar value 512 represents a confidence the artificial neural network 106 to detect a particular pattern at a specific test input of the plurality of test input. Therefore, advantageously, the binarizing and accumulation of the activation map 506 reduces amount of relevant information to the single scalar value 512.

In one example, the artificial neural network 106 was a You only look once version 3 (YOLOv3) model configured to detect traffic violations in a roadway. In such a case, the processing unit 202 is configured to select at least 72 Leaky rectified linear unit activation layers from the YOLOv3 model as they represent most of the information present in the activation traces.

In one example, the processing unit 202 is configured to use 16000 images from a plurality of training images used to train the artificial neural network, to find activation thresholds for each unit in the 72 layers of the artificial neural network 106. The determined activation thresholds are used by the processing unit 202 to compress a plurality of activation traces of the artificial neural network 106. In one example, a size of an activation trace of a single image using all LeakyRELU layers from the YOLOv3 model was compressed from 153 megabytes to 63 kilobytes.

Referring back to FIG. 2, the processing unit 202 is further configured to determine a type of surprise adequacy metric from a plurality of types of surprise adequacy metrics. The plurality of types of surprise adequacy metrics includes at least one of a distance-based metrics, a likelihood based metrics, and a mahalanobis distance based metric. In one example, the type of surprise adequacy metric is determined based on a user input. In another example, the type of surprise adequacy metric is determined based on a type of the artificial neural network 106. In one example, the artificial neural network is a convoluted neural network. In such a case the mahalanobis distance based metric is determined for the artificial neural network. In one example, the type of surprise adequacy metric is determined by the processing unit 202 based on at least one lookup table stored in the memory 204.

In one example, the type of surprise adequacy metric is determined to be the Mahalanobis distance-based metric (MDSA). The MDSA metric is calculated for an input based on a mean value and a covariance matrix associated with the plurality of compressed activation traces of the artificial neural network. The processing unit 202 is further configured to determine the mean value ($\mu$) and the covariance matrix ($\Sigma$) based on the plurality of compressed activation traces of the artificial neural network. In such a case, the surprise adequacy metrics (SA) for any new input x is calculated based on the following equation (1):

$$MDSA(x) = \sqrt{(\alpha_{L_f}(x) - \mu_c)^T S_c^{-1} (\alpha_{L_f}(x) - \mu_c)} \quad .. \tag{1}$$

The processing unit 202 is further configured to determine a surprising input adequacy metric for the artificial neural network 106 based on an analysis of the plurality of compressed activation traces. In one example, the surprising input adequacy metric is determined based on the determined mean value and the determined covariance matrix.

The processing unit 202 is further configured to determine a value of the surprise adequacy metric for each of the plurality of test inputs. The processing unit 202 is further configured to the received plurality of test inputs based on the determined surprising input adequacy metric to determine at least one surprising input from the plurality of test inputs.

The processing unit 202 is further configured to determine, for each test input of the plurality of test inputs, the at least one parameter value specific to the determined type of surprising input adequacy metric. For example, in a case where the type of surprising input adequacy metric is determined to be the Mahalanobis distance-based metric, the determined at least one parameter value comprises the mean and the covariance matrix.

The processing unit 202 is further configured to determine at least one surprising input from the plurality of test inputs based on an analysis of the at least one parameter value determined for each test input of the plurality of test inputs.

In one example, the at least one surprising input is a test input which has the greatest surprising input metric among the plurality of test inputs.

The processing unit 202 is further configured to test the artificial neural network based on the determined at least one surprising input. Advantageously, the artificial neural network is tested using surprising inputs. Thus, testing time of the artificial neural network is reduced. Furthermore, the method enables testing of the artificial neural network with a large number of surprising inputs. Therefore, a robustness of the artificial neural network is significantly improved.

The communication interface 208 is configured for establishing communication sessions between the plurality of sensors 120A-N, and the management system 102. In an embodiment, the communication interface 208 interacts with the interface at the plurality of sensors 120A-N for allowing the management system 102 to access sensor data captured by the plurality of sensors 120A-N.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the management system 102 and the plurality of sensors 120A-N.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

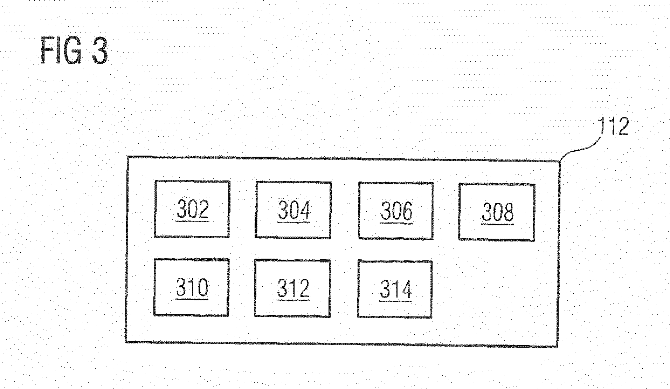

FIG 3 is a block diagram of the neural network test module 112, such as those shown in FIG 2, in which an embodiment of the present invention can be implemented. In FIG 3, the neural network test module 112 comprises a request handler module 302, an activation trace compression module 304, an analysis module 306, a surprise adequacy module 308, a test module 310, a validation module 312 and a deployment module 314. FIG. 3 is explained in conjunction with FIG. 1 and FIG. 2.

The request handler module 302 is configured for receiving the request to test the artificial neural network 106. For example, the request is received from one of the one or more users external to the industrial environment 100 via a network.

The activation trace compression module 304 is configured to compress the plurality of activation traces associated with the artificial neural network 106. The activation trace compression module 304 is configured to determine the activation threshold for the artificial neural network 106. The activation trace compression module 304 is further configured to binarize the activation map associated with each neuron of the plurality of neurons 108.

The analysis module 306 is configured for the plurality of training data inputs to determine the activation map for each neuron of the plurality of neurons 108.

The surprise adequacy module 308 is configured to determine the type of surprise adequacy metric for the artificial neural network 106. The surprise adequacy module 308 is further configured to determine a value of the surprise adequacy metric determined for the artificial neural network 106.

The test module 310 is configured to determine the surprising inputs from the plurality of test data inputs. The test module 310 is further configured to test the artificial neural network 106 using the determined surprising inputs.

The validation module 312 is configured to validate the artificial neural network 106 based on a plurality of test results generated during testing of the artificial neural network 106.

The deployment module 314 is configured to retrain the artificial neural network 106 based on the plurality of test results generated during testing of the artificial neural network 106. The deployment module 314 is configured to deploy the retrained artificial neural network 106 into the management system 102.

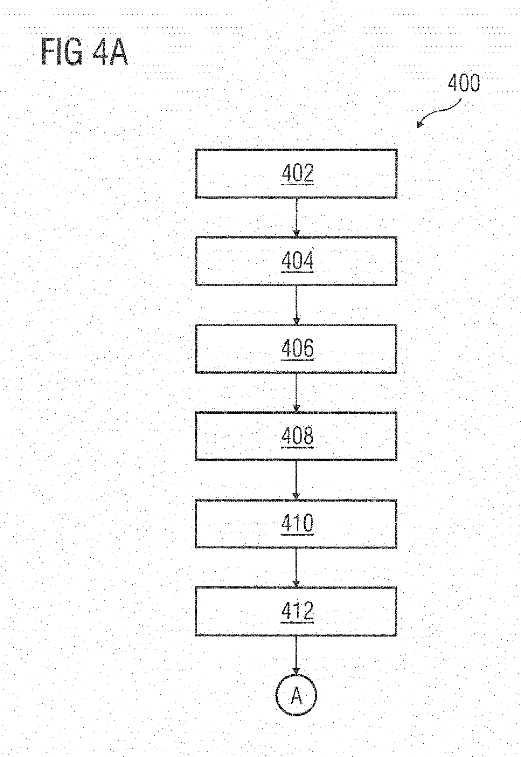

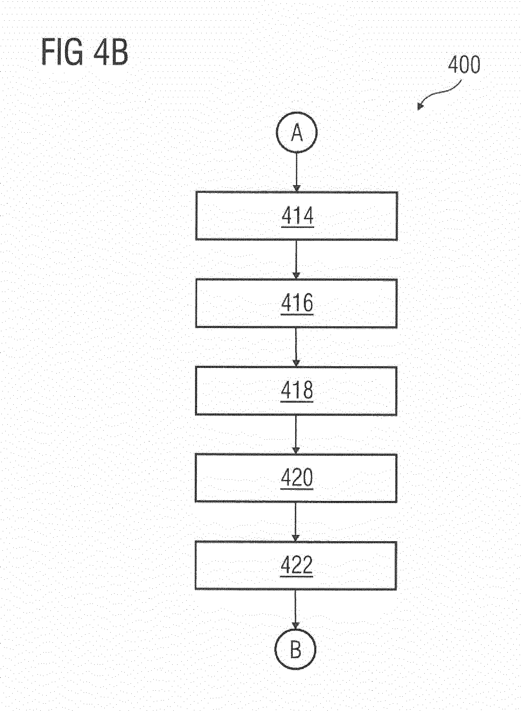

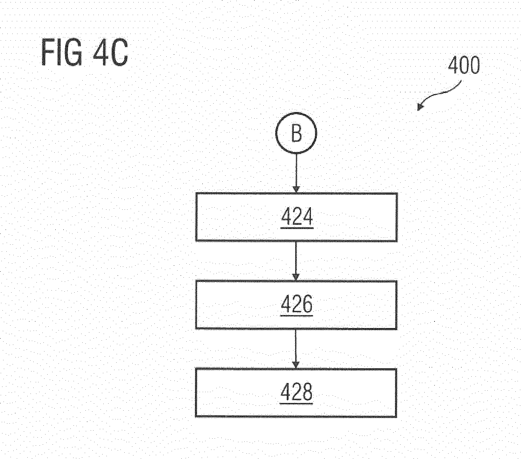

FIG 4A-C is a process flowchart illustrating an exemplary method 400 of testing an artificial neural network using surprising inputs, according to an embodiment of the present invention.

At step 402, the plurality of test input are received by the processing unit 202 for the artificial neural network 106. The plurality of test input comprises a plurality of data items for testing the artificial neural network for robustness. In one example, the plurality of test input comprises the plurality of images 124 captured by the plurality of cameras of the management system 102. In one example, the plurality of images 124 comprises images of roadways and vehicles.

At step 404, the artificial neural network 106 is deployed by the processing unit 202 on each of a plurality of training data items which are used to train the artificial neural network 106. In one example, the plurality of training data items comprises a plurality of training images. The plurality of training images comprises images which are used to train the artificial neural network 106. The plurality of training images have a plurality of data labels comprising information used to train the artificial neural network 106.

To deploy the artificial neural network, the processing unit 202 is configured to pass each of the plurality of training data items through the artificial neural network 106. The artificial neural network 106 comprises a plurality of neurons 108 arranged in a plurality of layers. Each layer of the plurality of layers has an activation function. The activation function is a nonlinear transform which is configured to convert an input fed into a specific layer, into an output generated by the specific layer. A plurality of outputs generated by the artificial neural network based on each input passed through the artificial neural network, is called an activation trace of the input with respect to the artificial neural network. The artificial neural network has a plurality of activation traces corresponding to a plurality of inputs fed into the artificial neural network.

Each of the plurality of neurons 108 are configured to generate an output value when activated by each of the plurality of training data items. The processing unit 202 is further configured to determine a plurality of outputs generated by the artificial neural network 106, when the artificial neural network 106 is deployed on the plurality of training data items.

At step 406, the plurality of training data items and the plurality of outputs are analyzed by the processing unit 202 to determine an activation range for each neuron of the plurality of neurons 108 of the artificial neural network 106. The activation range of a specific neuron corresponds to a maximum and minimum activation level of the specific neuron with respect to a specific input passed through the specific neuron.

At step 408, the activation map is generated by the processing unit 202 for each of the plurality of neurons 108 of the artificial neural network 106 based on the determined activation range for each neuron of the plurality of neurons 108. The activation map of a neuron is a spatial representation of the activation range of the neuron. The activation map of a specific neuron comprises an activation trace associated with the specific neuron. The plurality of activation maps associated with the artificial neural network comprises a plurality of activation traces of the artificial neural network 106.

At step 410, the plurality of training data items are ranked by the processing unit 202 based on a value of each of the plurality of output generated by the artificial neural network 106. In one example, the plurality of training data items are ranked based on the activation range of each neuron of the plurality of neurons 108 and each training data item of the plurality of training data items.

At step 412, a set of training data items which are ranked highest among the plurality of training data items, are determined by the processing unit 202. In one example, the processing unit 202 is configured to determine the set of training data items which are in a top twenty percentile of the ranked plurality of training data items.

At step 414 an activation threshold is determined by the processing unit 202 from the determined set of training data items. The activation threshold corresponds to an activation range of a lowest ranked training data item in the set of training data items.

At step 416, the activation map of each of the plurality of neurons is binarized by the processing unit 202 based on the determined activation threshold. In one example, the activation map of each neuron is split into a first portion comprising outputs greater than the activation threshold and a second portion comprising outputs lesser than the activation threshold. The processing unit 202 is further configured to generate a sum of the binarized plurality of activation maps across spatial dimensions to compress the plurality of activation traces comprised in the plurality of activation maps. In other words, the activation map of each neuron is compressed by the processing unit 202 to generate the plurality of compressed activation traces for the artificial neural network 106.

At step 418, a type of surprise adequacy metric is determined by the processing unit 202 from a plurality of types of surprise adequacy metrics. The plurality of types of surprise adequacy metrics includes at least one of a distance-based metrics, a likelihood based metrics, and a mahalanobis distance based metric. In one example, the type of surprise adequacy metric is determined based on a user input. In another example, the type of surprise adequacy metric is determined based on a type of the artificial neural network 106. In one example, the artificial neural network is a convuluted neural network. In such a case the mahalanobis distance based metric is determined for the artificial neural network. In one example, the type of surprise adequacy metric is determined by the processing unit 202 arbitrarily.

In one example, the type of surprise adequacy metric is determined to be the Mahalanobis distance-based metric (MDSA). The MDSA metric is calculated for an input based on a mean value and a covariance matrix associated with the plurality of compressed activation traces of the artificial neural network. The processing unit 202 is further configured to determine the mean value ($\mu$) and the covariance matrix ($\Sigma$) based on the plurality of compressed activation traces of the artificial neural network.

At step 420, a surprising input adequacy metric is determined by the processing unit 202 for the artificial neural network 106 based on an analysis of the plurality of compressed activation traces. In one example, the surprising input adequacy metric is determined based on the determined mean value and the determined covariance matrix.

At step 422, the value of the surprise adequacy metric is determined by the processing unit 202 for each of the plurality of test inputs. The processing unit 202 is further configured to analyze the received plurality of test inputs based on the determined surprising input adequacy metric to determine at least one surprising input from the plurality of test inputs.

At step 424, for each test input of the plurality of test inputs, the at least one parameter value specific to the determined type of surprising input adequacy metric is determined by the processing unit 202. For example, in a case where the type of surprising input adequacy metric is determined to be the Mahalanobis distance-based metric, the determined at least one parameter value comprises the mean and the covariance matrix.

At step 426, the at least one surprising input is determined by the processing unit 202 from the plurality of test inputs based on an analysis of the at least one parameter value determined for each test input of the plurality of test inputs. In one example, the at least one surprising input is a test input which has the greatest surprising input metric among the plurality of test inputs.

At step 428, the artificial neural network 106 is tested by the processing unit 202 based on the determined at least one surprising input. Advantageously, the artificial neural network 106 is tested using surprising inputs. Thus, testing time of the artificial neural network is reduced. Furthermore, the method enables testing of the artificial neural network with a large number of surprising inputs. Therefore, a robustness of the artificial neural network is significantly improved.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**List of reference numbers:**

1.     an apparatus 100
2.     an management system 102
3.     plurality of sensors 120A-N
4.     a network connection 104
5.     artificial neural network 106
6.     neurons 108
7.     plurality of industrial devices 108A-N
8.     a platform 110
9.     neural network test module 112
10.    a server 114
11.    a network interface 116
12.    a database 118
13.    a processor(s) 202
14.    an accessible memory 204
15.    a storage unit 206
16.    a communication interface 208
17.    an input-output unit 210
18.    a network interface 212
19.    a bus 214
20.    an integrated development environment (IDE) 216
21.    a request handler module 302,
22.    a activation trace compression module 304,
23.    an analysis module 306,
24.    surprise adequacy module 308
25.    test module 310
26.    a validation module 312
27.    a deployment module 314.

**Claims**

1.   A method of testing an artificial neural network (106) using surprising inputs, the method comprising:

   receiving, by a processing unit (202), a plurality of test input comprising a test dataset for an artificial neural network (106)comprising a plurality of neurons (108);
   analyzing, by the processing unit (202), a plurality of training data items of the artificial neural network (106) to determine an activation range for each neuron of the plurality of neurons (108);
   determining, by the processing unit (202), an activation threshold for the artificial neural network (106) based on an analysis of the determined activation range for each neuron of the plurality of neurons (108);

compressing, by the processing unit (202), an activation map of each neuron of the plurality of neurons (108), by use of the activation threshold, to generate a plurality of compressed activation traces for the artificial neural network (106);

determining, by the processing unit (202), a surprising input adequacy metric for the artificial neural network (106) based on an analysis of the plurality of compressed activation traces;

analyzing, by the processing unit (202), the received plurality of test inputs based on the determined surprising input adequacy metric to determine at least one surprising input from the plurality of test inputs; and

testing, by the processing unit (202), the artificial neural network (106) based on the determined at least one surprising input.

2. The method according to claim 1, wherein analyzing the plurality of training data items comprises:

deploying, by the processing unit (202), the artificial neural network (106) on each of the plurality of training data items, wherein each of the plurality of training data items is fed to the artificial neural network (106) as input;

determining, by the processing unit (202), a plurality of outputs of the artificial neural network (106) when the artificial neural network (106) is deployed on the plurality of training data items; and

generating, by the processing unit (202), the activation map (106 for each of the plurality of neurons (108) of the artificial neural network based on the determined activation range of each of the plurality of neurons (108).

3. The method according to claim 1 or 2, wherein determining, the activation threshold for the artificial neural network (106) comprises:

ranking, by the processing unit (202), the plurality of training data items based on a value of each of the plurality of output generated from each of the plurality of training data items; and

determining, by the processing unit (202), the activation threshold based on the ranking of the plurality of training data items.

4. The method according to claim 1, wherein compressing the activation map (506) comprises:

binarizing, by the processing unit (202), the activation map (506) of each of the plurality of neurons (108) based on the determined activation threshold; and

generating, by the processing unit (202), the compressed plurality of activation traces by analyzing the binarized activation map of each of the plurality of neurons.

5. The method according to claim 1, determining the surprising input metric for the artificial neural network comprises:

determining, by the processing unit (202), a type of surprising input adequacy metric from a plurality of types of surprising input adequacy metrics based on the plurality of compressed activation traces;

determining, by the processing unit (202), at least one parameter value specific to the determined type of surprising input adequacy metric; and

determining, by the processing unit (202), the surprising input adequacy metric for the artificial neural network based on the determined at least one parameter value.

6. The method according to claim 1, analyzing the plurality of test inputs to determine the at least one surprising input comprises:

determining, by the processing unit (202), for each test input of the plurality of test inputs, the at least one parameter value specific to the determined type of surprising input adequacy metric; and

determining, by the processing unit (202), the at least one surprising input from the plurality of test inputs based on an analysis of the at least one parameter value determined for each test input of the plurality of test inputs.

7. The method according to claim 1, wherein the plurality of training data items and the plurality of test inputs comprises a plurality of images captured by a camera.

8. An apparatus (100) for testing an artificial neural network, the apparatus (100) comprising:
a processing unit (202) configured to:

receive a plurality of test input for the artificial neural network (106), wherein the artificial neural network (106) comprises a plurality of neurons;

analyze a plurality of training data items of the artificial neural network (106) to determine an activation map (506) for each neuron of the plurality of neurons (108);

determine an activation threshold for the artificial neural network based on an analysis of the determined activation range for each neuron of the plurality of neurons;

compress an activation map (506) for each neuron of the plurality of neurons, by use of the activation threshold, to generate a plurality of compressed activation traces for the artificial neural network (106);

determine a surprising input adequacy metric for the artificial neural network (106) based on an analysis of the plurality of compressed activation traces;

analyze the received plurality of test inputs based on the determined surprising input adequacy metric to determine at least one surprising input from the plurality of test inputs; and

test the artificial neural network (106) based on the determined at least one surprising input.

9. The apparatus according to claim 8, wherein the processing unit is further configured to:

deploy the artificial neural network (106) on each of the plurality of training data items, wherein each of the plurality of training data items is fed to the artificial neural network as input;

determine a plurality of outputs of the artificial neural network (106) when the artificial neural network is deployed on the plurality of training data items;

determine an activation range for each neuron of the plurality of neurons (108) based on an analysis of the plurality of outputs; and

generate the activation map for each of the plurality of neurons (108) of the artificial neural network (106) based on the determined activation range of the artificial neural network (106), the plurality of training data items, and the plurality of outputs.

10. The apparatus according to claim 8 or 9, the processing unit is further configured to:

rank the plurality of training data items based on a value of each of the plurality of output generated from each of the plurality of training data items; and

determine the activation threshold from the based on the ranking of the plurality of training data items.

11. The apparatus according to claim 8, the processing unit (202) is further configured to:

binarize the activation map (506) of each of the plurality of neurons (108) based on the determined activation threshold; and

generate the compressed plurality of activation traces by analyzing the binarized activation map of each of the plurality of neurons (108).

12. The apparatus according to claim 8, wherein the processing unit (202) is further configured to:

determine a type of surprise adequacy metric from a plurality of types of surprising input adequacy metrics;

determine at least one parameter value specific to the determined type of surprising input adequacy metric; and

determine the surprising input adequacy metric for the artificial neural network (106) based on the determined at least one parameter value.

13. The apparatus according to claim 8, the processing unit (202) is further configured to:

determine for each test input of the plurality of test inputs, the at least one parameter value specific to the determined type of surprising input adequacy metric; and

determine the at least one surprising input from the plurality of test inputs based on an analysis of the at least one parameter value determined for each test input of the plurality of test inputs.

14. A computer-program product, having machine-readable instructions stored therein, that when executed by a processing unit (202), cause the processors to perform a method according to any of the claims 1-7.

FIG 1

# FIG 2

FIG 3

FIG 4A

400

FIG 4B

400

```
   (A)
    |
    v
+---------+
|   414   |
+---------+
    |
    v
+---------+
|   416   |
+---------+
    |
    v
+---------+
|   418   |
+---------+
    |
    v
+---------+
|   420   |
+---------+
    |
    v
+---------+
|   422   |
+---------+
    |
    v
   (B)
```

FIG 4C

400

B

424

426

428

FIG 5

Europäisches
Patentamt
European
Patent Office
Office européen
des brevets

# EUROPEAN SEARCH REPORT

**Application Number**

EP 22 17 6304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINHAN KIM ET AL: "Reducing DNN Labelling Cost using Surprise Adequacy: An Industrial Case Study for Autonomous Driving", ARXIV.ORG, CORNELL UNIVERSITY LIBRARY, 201 OLIN LIBRARY CORNELL UNIVERSITY ITHACA, NY 14853, 7 September 2020 (2020-09-07), XP091316945, DOI: 10.1145/3368089.3417065 * page 1 – page 4 * | 1–14 | INV. G06N3/08 G06N3/04 |
| X | KR 102 287 430 B1 (KOREA ADVANCED INST SCI & TECH [KR]; ACCELERANDIUM AB [SE]) 9 August 2021 (2021-08-09) * the whole document * | 1–14 | |
| X | JINHAN KIM ET AL: "Guiding Deep Learning System Testing using Surprise Adequacy", ARXIV.ORG, CORNELL UNIVERSITY LIBRARY, 201 OLIN LIBRARY CORNELL UNIVERSITY ITHACA, NY 14853, 25 August 2018 (2018-08-25), XP091316938, DOI: 10.1109/ICSE.2019.00108 * the whole document * | 1–14 | |
| A | GEORGIADIS GEORGIOS: "Accelerating Convolutional Neural Networks via Activation Map Compression", 2019 IEEE/CVF CONFERENCE ON COMPUTER VISION AND PATTERN RECOGNITION (CVPR), IEEE, 15 June 2019 (2019-06-15), pages 7078–7088, XP033686746, DOI: 10.1109/CVPR.2019.00725 [retrieved on 2020-01-08] * page 2 * | 1,3,4 | TECHNICAL FIELDS SEARCHED (IPC) G06N |

The present search report has been drawn up for all claims

| Place of search | Date of completion of the search | Examiner |
|---|---|---|
| The Hague | 3 November 2022 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 6304

03-11-2022

| Patent document cited in search report | Publication date | Patent family member(s) | Publication date |
|---|---|---|---|
| KR 102287430 B1 | 09-08-2021 | NONE | |